# FASCICULE DE BREVET EUROPEEN

(11) **EP 0 575 243 B1**
(45) Date de publication et mention de la délivrance du brevet: **31.01.1996**
(21) Numéro de dépôt: 93401532.2
(22) Date de dépôt: 15.06.1993
(51) Int. Cl.: B60N 2/04

(54) **Perfectionnements aux sièges de véhicules à réglages multiples**
Fahrzeugsitz mit mehrfachen Einstellungen
Vehicle seat with multiple adjustment

(30) Priorité: 18.06.1992 FR 9207428
(43) Date de publication de la demande: 22.12.1993
(73) Titulaire: BERTRAND FAURE AUTOMOBILE "B.F.A.", F-91300 Massy (FR)
(72) Inventeur: Judic, Jean-Marc, F-91400 Orsay (FR); Canteleux, Joel, F-28320 Armenonville (FR)
(74) Mandataire: Behaghel, Pierre

(56) Documents cités:
- EP-A- 0 205 409
- EP-A- 0 445 528
- DE-A- 2 945 559
- DE-A- 3 843 684
- FR-A- 2 556 294
- US-A- 3 006 594

## Description

L'invention est relative aux sièges avant de véhicules qui comprennent une embase, une assise et un dossier et qui se prêtent au réglage de la hauteur et de l'inclinaison de l'assise par rapport à l'embase, au réglage de l'inclinaison du dossier et/ou au rabattement dudit dossier vers l'avant de façon à faciliter l'accès aux places arrière du véhicule.

Dans le présent texte, on désigne par le mot "embase" la pièce qui supporte l'assise et qui peut être ou non déplaçable horizontalement selon la direction longitudinale du véhicule par rapport au plancher de ce véhicule, ladite pièce comprenant généralement, dans la première hypothèse, deux profilés supérieurs propres à coulisser longitudinalement le long de deux profilés inférieurs fixés au plancher et formant avec eux deux glissières.

On adoptera en outre ici, pour simplifier, le terme "bielle" pour désigner aussi bien une bielle rigide proprement dite qu'une paire de bielles rigides disposées respectivement sur les deux côtés du siège concerné et solidarisées entre elles par tout moyen d'entretoisement transversal désirable.

On désignera également par le mot "axes" des axes horizontaux transversaux, c'est-à-dire orientés perpendiculairement à la direction longitudinale du véhicule.

L'invention vise plus particulièrement, parmi les sièges du genre en question, ceux pour lesquels l'assise est montée sur l'embase par l'intermédiaire de deux bielles, l'une arrière et l'autre avant, dont les ex-trémités supérieures sont montées pivotantes autour de deux axes solidaires de l'assise, l'extrémité inférieure de la bielle arrière étant montée pivotante autour d'un troisième axe solidaire de l'embase et l'extrémité inférieure de la bielle avant étant montée pivotante autour d'un quatrième axe lié à l'embase (voir par exemple FR-A-2 556 294).

L'invention a pour but, surtout, de rendre les sièges du genre en question tels qu'ils répondent mieux que jusqu'à ce jour aux diverses exigences de la pratique, et notamment :
- qu'ils se prêtent à un fonctionnement en "relax" ou "bascule", c'est-à-dire pour lequel les variations d'inclinaison du dossier entraînent automatiquement des variations d'inclinaison de l'assise, toute augmentation de l'inclinaison du dossier vers l'arrière sur la verticale se traduisant par une augmentation de l'inclinaison de l'assise vers l'arrière sur l'horizontale et inversement, et ce tout en rendant possibles les rabattements du dossier vers l'avant,
- et que les éléments constitutifs desdits sièges (embases, assises et dossiers) demeurent en toute circonstance reliés entre eux par des bielles rigides, les systèmes d'accrochage, provisoirement décrochables pour certains réglages, des constructions antérieures, étant ici totalement supprimés, ce qui augmente la sécurité.

A cet effet, les sièges du genre en question selon l'invention sont essentiellement caracterisés :
- en ce que le quatrième axe est lié à l'embase par l'intermédiaire d'un triangle rigide lui-même monté pivotant autour d'un cinquième axe solidaire de l'embase et disposé en arrière du quatrième axe et un peu plus haut que celui-ci,
- en ce que le dossier est monté pivotant, d'une part, autour d'un sixième axe de réglage d'inclinaison et, d'autre part, autour d'un septième axe de rabattement solidaire de l'embase,
- et en ce qu'une troisième bielle rigide relativement longue relie un huitième axe solidaire du triangle et disposé plus bas que les quatrième et cinquième axes et en arrière du quatrième à un neuvième axe solidaire du dossier et disposé en arrière du sixième axe et plus bas que celui-ci pour les positions normales, c'est-à-dire non rabattues, du dossier.

Dans des modes de réalisation préférés, on a recours en outre à l'une et/ou à l'autre des dispositions suivantes :
- le sixième axe est relié au septième par une quatrième bielle inclinée obliquement vers le bas et vers l'avant à partir de ce sixième axe pour les positions normales, c'est-à-dire non rabattues, du dossier,
- le septième axe solidaire de l'embase est situé à peu près à mi-chemin entre les troisième et cinquième axes,
- le triangle rigide présente une forme sensiblement isocèle avec un petit côté reliant le quatrième au cinquième axe et deux grands côtés reliant le huitième axe à respectivement les quatrième et cinquième axes,
- les longueurs des quatre bielles sont comprises respectivement, pour chacune des deux premières et de la quatrième, entre 25 et 120 mm, et pour la troisième, relativement longue, entre 200 et 300 mm.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant aux dessins ci-annexés d'une manière bien entendu non limitative.

La figure 1, de ces dessins, montre très schématiquement un siège de véhicule à réglages multiples établi selon l'invention, dans son état correspondant à la position basse de l'assise et à une inclinaison normale du dossier.

Les figures 2, 3 et 4 diffèrent uniquement de la figure 1 par, respectivement :
- le remplacement de l'inclinaison normale du dossier par une inclinaison plus couchée, dite "relaxe", de ce dossier,
- le rabattement du dossier vers l'avant,
- et le passage de l'assise en sa position haute.

Le siège considéré comprend :
- une embase 10, qui est de préférence elle-même réglable en avance ou recul par rapport au plancher 11 du véhicule et comprend à cet effet des glissières longitudinales connues en soi, ladite embase, en toute position réglée, étant solidarisée avec ledit plancher,
- une assise 12,
- et un dossier 13.

L'assise et le dossier comportent chacun une ossature et un coussin : dans le présent texte, les mots assise" et "dossier" se rapportent plus précisément aux ossatures.

Entre l'embase et l'assise est interposée une rehausse, ou mécanisme de réglage en hauteur, comprenant deux bielles rigides au sens précisé ci-dessus, savoir une bielle arrière 14 et une bielle avant 15, s'étendant toutes les deux vers l'arrière et vers le bas à partir de l'assise.

Les extrémités supérieures avant de ces deux bielles sont montées pivotantes autour de respectivement un premier axe 1 et un second axe 2 tous les deux solidaires de l'assise 12.

L'extrémité arrière inférieure de la bielle arrière 14 est montée pivotante autour d'un troisième axe 3 solidaire de l'embase.

Quant à l'extrémité inférieure arrière de la bielle avant 15, elle est montée pivotante autour d'un quatrième axe 4 qui est lui-même lié à un cinquième axe 5 solidaire de l'embase 10 par l'intermédiaire d'une manivelle 16 faisant partie d'un triangle rigide T.

Ladite manivelle 16, qui relie les axes 4 et 5, s'étend vers le haut et vers l'arrière à partir de l'axe 4 et constitue la petite base d'un triangle isocèle définissant le triangle T : le sommet de ce triangle isocèle, disposé à l'opposé de la petite base 16 et relié par deux grands côtés sensiblement identiques 17 et 18, respectivement aux deux axes 4 et 5, est désigné sur le dessin par la référence 8 et est disposé plus bas que ces deux axes.

Pour ce qui est du dossier 13, il est monté de façon pivotante, d'une part, autour d'un sixième axe 6 aux fins de réglage de son inclinaison et, d'autre part, autour d'un septième axe 7 solidaire de l'embase 10 aux fins de rabattement.

Les deux axes 6 et 7 peuvent être confondus en un seul.

Dans le mode de réalisation illustré préféré, ces deux axes 6 et 7 sont distincts et reliés mutuellement par une bielle rigide 19 s'étendant vers le bas et vers l'avant à partir de l'axe 6 : cette disposition permet de dégager un espace arrière plus grand lors des rabattements du dossier vers l'avant.

Enfin, une bielle relativement longue 20, dite de "relaxation", a son extrémité inférieure avant montée pivotante sur le triangle T autour de l'axe 8 et son extrémité supérieure arrière montée pivotante autour d'un neuvième axe 9 solidaire du dossier 13 et disposé, pour les positions d'inclinaison normales de ce dossier, c'est-à-dire non rabattues, en arrière de l'axe 6 et plus bas que celui-ci.

Sur les figures, qui sont des vues latérales du siège, chacun des neuf axes horizontaux transversaux 1 à 9 est représenté par un point ; ceux, 1 et 2, qui sont solidaires de l'assise, sont entourés par des cercles relativement grands ; ceux, 3, 5 et 7, solidaires de l'embase, sont entourés par des carrés et les quatre autres 4, 6, 8 et 9 sont entourés par des petits cercles.

On voit sur les dessins que l'axe 7 solidaire de l'embase se trouve pratiquement à mi-chemin entre les deux axes 3 et 5 également solidaires de l'embase.

Les différents montages pivotants autour des axes 1 à 9 sont avantageusement réalisés à l'aide de rivets dont les têtes élargies coopèrent avec les bords adjacents de trous évidés dans des flasques verticaux.

Dans des modes de réalisation préférés, les longueurs des bielles 14, 15 et 19 sont toutes les trois comprises entre 25 et 120 mm et la longueur de la bielle relativement longue 20 est comprise entre 200 et 300 mm.

Avec le siège qui vient d'être décrit, on peut à volonté régler l'inclinaison du dossier et en conséquence l'inclinaison de l'assise, dans le même sens, rabattre ledit dossier vers l'avant en mémorisant son inclinaison avant rabattement, et régler le niveau de l'assise.

Chacune de ces trois commandes est réalisée en effectuant, après déblocage, un pivotement :
- du dossier 13 autour de l'axe 6,
- dudit dossier 13 alors lié à la bielle 19 autour de l'axe 7,
- et de la bielle 15 autour de l'axe 2.

La première et la troisième commandes peuvent être motorisées ou manuelles et, dans ce dernier cas, avantageusement associées à des compensations (de poids ou de poussées dorsales) à l'aide de ressorts appropriés.

La deuxième commande est en général effectuée en déplaçant à la main le sommet du dossier après avoir libéré en rotation la bielle 19 autour de l'axe 7.

Ces différentes commandes se traduisent par les effets suivants.

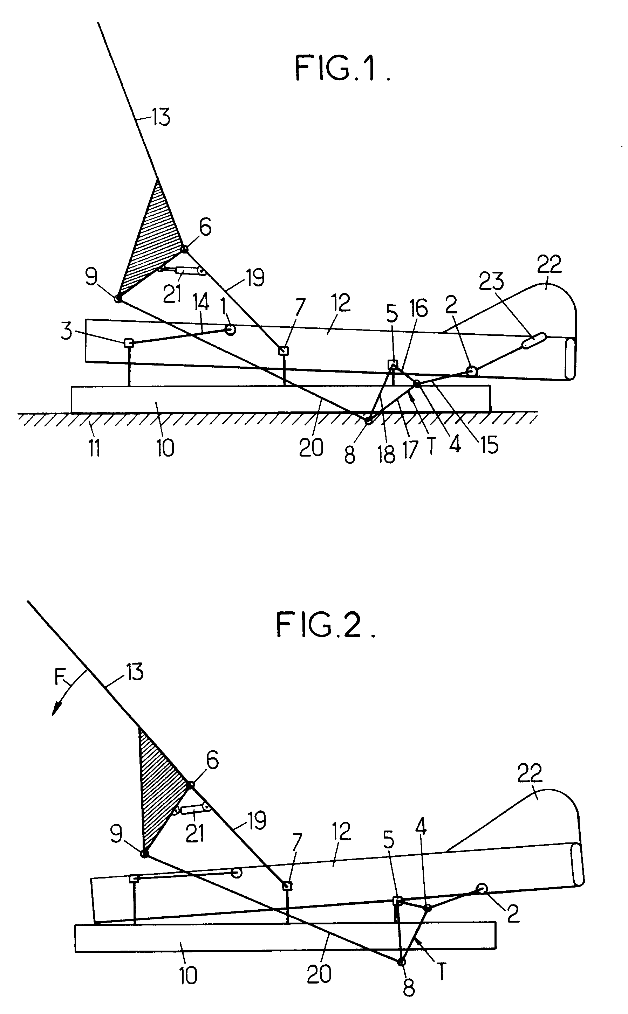

On peut considérer à titre d'exemple comme état initial ou de repos celui, qui a été illustré sur la figure 1, pour lequel l'assise 12 se trouve en sa position la plus basse, et le dossier 13, en une inclinaison normale.

Les pivotements autour des trois axes 2, 6 et 7 sont alors bloqués.

Sur la figure 2, le dossier 13 est passé en une position de relaxation, plus couchée vers l'arrière que sur la figure 1.

Pour passer en cette position, il a suffi de débloquer le pivotement dudit dossier autour de l'axe 6 et de faire intervenir par exemple un petit vérin 21 (figure 1) interposé entre la bielle 19 et le dossier 13.

On constate que le déplacement angulaire qui en est résulté du dossier 13 autour de l'axe 6, selon la flèche F de la figure 2, a eu pour effet de déplacer vers l'avant la longue bielle 20 de relaxation en faisant pivoter le triangle T autour de l'axe 5 et en relevant légèrement l'axe 4 ainsi que l'axe 2, qui est le seul alors bloqué par rapport à l'assise.

En d'autres termes, l'inclinaison du dossier 13 vers l'arrière se traduit automatiquement par un relèvement du bord avant 22 de l'assise, ainsi que bien visible sur la figure 2 : c'est là la fonction de relaxation du siège.

Par exemple l'inclinaison de l'assise sur l'horizontale vers l'arrière peut passer de 0 à environ 6 degrés lorsque l'inclinaison du dossier sur la verticale vers l'arrière passe de 15 à 45 degrés.

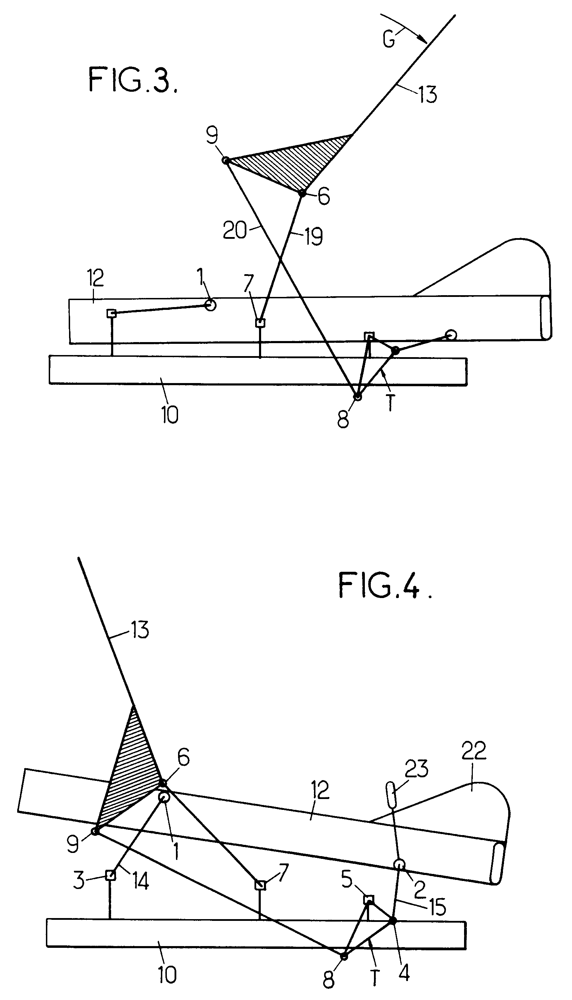

Sur la figure 3, les pivotements autour de l'axe 6 sont demeurés bloqués par rapport à la figure 1 et ce sont les pivotements autour de l'axe 7 qui ont été libérés, rendant ainsi possible le rabattement du dossier 13 vers l'avant selon la flèche G.

On peut constater que, lors de ce basculement, les positions des différents axes 2, 3, 4, 5, 7 et 8 sont demeurées pratiquement inchangées par rapport à leurs positions de référence de la figure 1. Mais l'axe 1 est un peu plus bas, de sorte que l'arrière de l'assise 12 est un peu abaissé, ce qui facilite l'accès aux places arrière.

Enfin, sur la figure 4, le dossier est demeuré pratiquement dans la position qu'il occupait sur la figure 1, et c'est l'assise 12 qui a été relevée par pivotement de la bielle 15 autour de l'axe 2 : on voit sur les figures 1 et 4 une manette de commande 23 qui est supposée liée angulairement à ladite bielle 15 et dont les rotations autour de l'axe 2 pourraient être exploitées pour effectuer la rehausse considérée.

On voit que, pour la position rehaussée, l'assise 12 est légèrement inclinée vers le bas vers l'avant.

Pour cette position rehaussée, chacune des deux bielles 14 et 15 est fortement inclinée sur l'horizontale et l'effet d'inclinaison qui vient d'être signalé est dû en partie au fait que la bielle arrière 14 est prévue plus longue que la bielle avant 15.

En suite de quoi, et quel que soit le mode de réalisation adopté, on obtient finalement un siège de véhicule se prêtant à des réglages multiples, sièges présentant en particulier par rapport à ceux antérieurement connus l'avantage important qu'en toutes circonstances, leurs différents éléments constitutifs demeurent liés les uns au autres par l'intermédiaire de bielles.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes telles que définies dans les revendications, notamment les variantes où le septième axe serait confondu avec le sixième, ce qui simplifierait la construction tout en conservant une accessibilité correcte aux place arrière lors du rabattement du dossier vers l'avant.

## Revendications

1. Siège avant de véhicule comprenant une embase (10), une assise (12) et un dossier (13) et pour lequel l'assise est montée sur l'embase par l'intermédiaire de deux bielles, l'une arrière (14) et l'autre avant (15), dont les extrémités supérieures sont montées pivotantes autour de deux axes (1,2) solidaires de l'assise, l'extrémité inférieure de la bielle arrière étant montée pivotante autour d'un troisième axe (3) solidaire de l'embase et l'extrémité inférieure de la bielle avant étant montée pivotante autour d'un quatrième axe (4) lié à l'embase, caractérisé en ce que le quatrième axe (4) est lié à l'embase par l'intermédiaire d'un triangle rigide (T) lui-même monté pivotant autour d'un cinquième axe (5) solidaire de l'embase et disposé en arrière du quatrième axe (4) et un peu plus haut que celui-ci, en ce que le dossier est monté pivotant, d'une part, autour d'un sixième axe (6) de réglage d'inclinaison et, d'autre part, autour d'un septième axe (7) de rabattement solidaire de l'embase, et en ce qu'une troisième bielle rigide relativement longue (20) relie un huitième axe (8) solidaire du triangle et disposé plus bas que les quatrième et cinquième axes (4,5) et en arrière du quatrième à un neuvième axe (9) solidaire du dossier et disposé en arrière du sixième axe (6) et plus bas que celui-ci pour les positions normales, c'est-à-dire non rabattues, du dossier.

2. Siège selon la revendication 1, caractérisé en ce que le sixième axe (6) est relié au septième (7) par une quatrième bielle (19) inclinée obliquement vers le bas et vers l'avant à partir de ce sixième axe pour les positions normales, c'est-à-dire non rabattues, du dossier (13).

3. Siège selon la revendication 2, caractérisé en ce que les longueurs des quatre bielles sont comprises respectivement, pour chacune des deux premières et de la quatrième, entre 25 et 120 mm, et pour la troisième, relativement longue, entre 200 et 300 mm.

4. Siège selon la revendication 1, caractérisé en ce que le septième axe (7) est confondu avec le sixième (6).

5. Siège selon l'une quelconque des précédentes revendications, caractérisé en ce que le septième axe (7) solidaire de l'embase est situé à peu près à mi-chemin entre les troisième et cinquième axes (3,5).

6. Siège selon l'une quelconque des précédentes revendications, caractérisé en ce que le triangle rigide (T) présente une forme sensiblement isocèle avec un petit côté reliant le quatrième (4) au cinquième (5) axe et deux grands côtés reliant le huitième axe (8) à respectivement les quatrième et cinquième axes.

## Claims

1. A vehicle front seat comprising a base (10), a seat proper (12), and a back (13), and for which the seat proper is mounted on the base by means of two rods, a rear rod (14) and a front rod (15), the top ends of the rods being pivotally mounted about two axes (1, 2) secured to the seat proper, the bottom end of the rear rod being pivotally mounted about a third axis (3) secured to the base, and the bottom end of the front rod being pivotally mounted about a fourth axis (4) linked to the base, the front seat being characterized in that the fourth axis (4) is linked to the base via a rigid triangle (T) itself pivotally mounted about a fifth axis (5) secured to the base and disposed behind the fourth axis (4) and a little above it; in that the back is pivotally mounted firstly about a sixth axis (6) for adjusting inclination and secondly about a tilting seventh axis (7) secured to the base; and in that a relatively long third rigid rod (20) connects an eighth axis (8) secured to the triangle and disposed lower down than the fourth and fifth axes (4, 5) and behind the fourth axis to a ninth axis (9) secured to the back and disposed behind the sixth axis (6) and lower down than the sixth axis in normal positions, i.e. when the back is not tilted down.

2. A seat according to claim 1, characterized in that the sixth axis (6) is connected to the seventh axis (7) by a fourth rod (19) obliquely inclined downwards and forwards from said sixth axis in normal positions of the back (13), i.e. when it is not folded down.

3. A seat according to claim 2, characterized in that the lengths of the four rods are respectively as follows, for the first, second, and fourth rods: 25 mm to 120 mm, and for the relatively long third rod, 200 mm to 300 mm.

4. A seat according to claim 1, characterized in that the seventh axis (7) coincides with the sixth axis (6).

5. A seat according to any preceding claim, characterized in that the seventh axis (7) secured to the base is situated about halfway between the third and fifth axes (3, 5).

6. A seat according to any preceding claim, characterized in that the rigid triangle (T) is substantially isosceles in shape, having a short side interconnecting the fourth and fifth axes (4, 5) and two long sides connecting the eighth axis (8) to the fourth and fifth axes respectively.

## Patentansprüche

1. Vordersitz für ein Kraftfahrzeug, der aus einem Sockel (10), einem Sitzteil (12) und einer Rückenlehne (13) besteht und bei dem das Sitzteil an dem Sockel mittels zweier Treibstangen, einer hinteren Treibstange (14) und einer vorderen Treibstange (15), befestigt ist, deren obere Enden schwenkbar um zwei Achsen (1, 2) befestigt sind, die an dem Sitzteil angebracht sind, während das untere Ende der hinteren Treibstange schwenkbar um eine dritte Achse (3) befestigt ist, die an dem Sockel angebracht ist, und das untere Ende der vorderen Treibstange schwenkbar um eine vierte Achse (4) ist, die mit dem Sockel verbunden ist, dadurch gekennzeichnet, daß die vierte Achse (4) mit dem Sockel mittels eines starren Dreiecks (T) verbunden ist, das seinerseits schwenkbar um eine fünfte Achse (5) ist, die mit dem Sockel verbunden und hinter der vierten Achse (4) und ein wenig höher als diese angeordnet ist, daß die Rückenlehne schwenkbar, einerseits um eine sechste Achse (6) zur Regelung der Neigung und andererseits um eine siebte Achse (7) zum Klappen, angeordnet ist, die an dem Sockel angebracht ist, und daß eine dritte, relativ lange Treibstange (20) eine achte Achse (8), die an dem Dreieck befestigt und tiefer als die vierte Achse (4) und die fünfte Achse (5) und hinter der vierten Achse angeordnet ist, mit einer neunten Achse (9) verbindet, die an der Rücklehne hinter der sechsten Achse (6) und tiefer als diese angeordnet ist, wenn die Rückenlehne in ihrer normalen Stellung, d. h. nicht geklappt, ist.

2. Sitz nach Anspruch 1, dadurch gekennzeichnet, daß die sechste Achse (6) mit der siebten Achse (7) über eine vierte Treibstange (19) verbunden ist, die ausgehend von der sechsten Achse schräg nach unten und vorn geneigt verläuft, wenn sich die Rückenlehne (13) in einer normalen, d. h. nicht geklappten Stellung, befindet.

3. Sitz nach Anspruch 2, dadurch gekennzeichnet, daß die Längen der vier Treibstangen so gewählt sind, daß die Länge der beiden ersten Stangen und der vierten Stange jeweils zwischen 25 und 120 mm und die Länge der dritten, relativ langen Stange zwischen 200 und 300 mm liegt.

4. Sitz nach Anspruch 1, dadurch gekennzeichnet, daß die siebte Achse (7) und die sechste Achse (6) zusammenfallen.

5. Sitz nach einem der vorhergehenden Ansprüche, dadurch gekennzeichnet, daß die siebte Achse (7), die mit dem Sockel verbunden ist, etwa auf dem halben Weg zwischen der dritten Achse (3) und der fünften Achse (5) liegt.

6. Sitz nach einem der vorhergehenden Ansprüche, dadurch gekennzeichnet, daß das starre Dreieck (T) im wesentlichen gleichschenklig ist, wobei die kleine Seite die vierte Achse (4) und die fünfte Achse (5) verbindet und die zwei langen Schenkel die achte Achse (8) mit der vierten bzw. fünften Achse verbinden.
